(19) Europäisches Patentamt / European Patent Office / Office européen des brevets

(11) EP 3 904 090 A1

(12) **EUROPEAN PATENT APPLICATION**
published in accordance with Art. 153(4) EPC

(43) Date of publication:
03.11.2021 Bulletin 2021/44

(51) Int Cl.:
**B32B 27/20** (2006.01)          **B32B 27/30** (2006.01)
**C08L 21/00** (2006.01)          **C08L 33/04** (2006.01)
**C08J 5/18** (2006.01)

(21) Application number: 19903591.6

(22) Date of filing: 27.12.2019

(86) International application number:
PCT/JP2019/051617

(87) International publication number:
WO 2020/138498 (02.07.2020 Gazette 2020/27)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.12.2018 JP 2018247297

(71) Applicant: Kuraray Co., Ltd.
Kurashiki-shi, Okayama 710-0801 (JP)

(72) Inventors:
• **OZAWA, Yushi**
  **Tainai-shi, Niigata 959-2691 (JP)**
• **TAGA, Sho**
  **Tainai-shi, Niigata 959-2691 (JP)**

(74) Representative: **Müller-Boré & Partner
Patentanwälte PartG mbB
Friedenheimer Brücke 21
80639 München (DE)**

(54) **BASE FILM FOR DECORATIVE FILM AND DECORATIVE FILM INCLUDING SAME**

(57)    A base film for decorative film, the base film comprising a resin composition comprising crosslinked rubber particles and a resin (1), the resin (1) mainly comprising a unit of (meth)acrylic acid ester and no ring structure in the main chain, and having a triad syndiotacticity (rr) of not less than 56% and a glass transition temperature of not less than 122 °C, wherein the base film satisfies the following formula:

$$1.2 \leq rr/c \leq 5.0$$

wherein rr is a percentage value of the triad syndiotacticity (rr) of the resin (1), and c is a percentage value of the mass ratio of the crosslinked rubber particles to the resin composition.

[FIG. 1]

**Description**

TECHNICAL FIELD

The present invention relates to a base film for a decorative film and a decorative film containing the same.

BACKGROUND ART

Decorative films are used to add decoration to the surface of various objects. There are two types of decorative films, one used for laminating decoration and another used for transfer decoration. The decorative film for transfer decoration is, for example, a film in which a base film, a release layer, a protective layer (hard coat layer, etc.), a decorative layer, and an adhesive layer are layered in this order. In transfer decoration, in order to transfer the decorative layer to the surface of an object, the object is brought into close contact with the adhesive layer of the decorative film, and then the release layer and the base film are peeled off. The decorative film for laminating decoration is, for example, a film in which a base film, a decorative layer, and an adhesive layer are layered in this order. In the laminating decoration, the object is brought into close contact with the adhesive layer of the decorative film. A methacrylic resin film, a polyester film, or the like is used as a base film for a decorative film.

As a methacrylic resin film, for example, Patent Document 1 discloses a multilayer film comprising an adhesive layer composed of a thermoplastic polymer composition and a base material layer composed of an amorphous resin having an elastic coefficient of 2 to 600 MPa at an arbitrary temperature of 110 to 160 °C, wherein the multilayer film has a breaking elongation of 160% or more at a temperature 5 °C lower than the glass transition temperature of the amorphous resin. Patent Document 1 discloses, as the amorphous resin, an acrylic resin comprising 10 to 99 parts by mass of a methacrylic resin (F) comprising 80% by mass or more of a structural unit derived from methyl methacrylate, and 90 to 1 part by mass of an elastic body (R).

Patent Document 2 disclose an acrylic film or sheet composed of a resin composition, the resin composition comprising 95 to 50% by weight of an acrylic resin comprising methyl methacrylate as a main component and having a glass transition temperature of 40 to 105 °C, and 5 to 50% by weight of a multilayer structure acrylic polymer containing a rubber elastic layer, wherein the multilayer structure acrylic polymers are dispersed in the acrylic resin.

Patent Document 3 discloses a laminated film comprising a layer (A) composed of a rubber particles and a methacrylic resin and a layer (B) composed of a copolymer of a styrene monomer and maleic anhydride, wherein the methacrylic resin is obtained by polymerizing 50 to 100% by weight of an alkyl methacrylate, 0 to 50% by weight of an alkyl acrylate and 0 to 49% by weight of the other monomers, the layer (B) is layered on at least one side of the layer (A) and the thickness of the layer (A) is 0.5 times or more the total thickness of the laminated film.

Patent Document 4 discloses a base film for vapor deposition, having a film thickness of 10 to 50 μm, and comprising a methacrylic resin composition, wherein the methacrylic resin composition has a glass transition temperature of 120 °C or higher, and contains a methacrylic resin having a triad syndiotacticity (rr) of 58% or more and 85% or less, comprising 99.5% by mass of a structural unit derived from methyl methacrylate.

Patent Document 5 discloses a thermoplastic resin film comprising 80 to 1 part by mass of a methacrylic resin (A) and 20 to 99 parts by mass of a vinyl acetal resin (B), wherein the total amount of the methacrylic resin (A) and the vinyl acetal resin (B) is 100 parts, the methacrylic resin (A) has a triad syndiotacticity (rr) of 58% or more, a weight average molecular weight of 50,000 to 150,000, a content of a component having a molecular weight of 200,000 or more of 0.1 to 10%, a content of a component having a molecular weight of less than 15,000 of 0.2 to 5%.

CITATION LIST

PATENT DOCUMENTS

Patent Document 1 : WO 2016/121868 A
Patent Document 2 : JP H10-279766 A
Patent Document 3 : JP 2009-196151 A
Patent Document 4 : JP 2017-101128 A
Patent Document 5 : JP 2016-94534 A

## SUMMARY OF THE INVENTION

### PROBLEMS TO BE SOLVED BY THE INVENTION

An object of the present invention is to provide a decorative film having excellent weather resistance and excellent decorative formability.

### MEANS FOR SOLVING THE PROBLEMS

In order to achieve the above object, the present invention completed includes the following aspects.

[1] A base film for decorative film, the base film comprising a resin composition comprising crosslinked rubber particles and a resin (1), wherein the resin (1) mainly comprises a unit of (meth)acrylic acid ester, has no ring structure in the main chain, and has a triad syndiotacticity (rr) of not less than 56% and a glass transition temperature of not less than 122 °C, and the base film satisfies the following formula:

$$1.2 \le rr/c \le 5.0$$

wherein rr is a percentage value of the triad syndiotacticity (rr) of the resin (1), and c is a percentage value of the mass ratio of the crosslinked rubber particles to the resin composition.
[2] The base film according to [1], wherein the amount of the crosslinked rubber particles with respect to the resin composition is 10 % by mass to 50 % by mass.
[3] A decorative film comprising the base film according to [1].
[4] The decorative film according to [3], further comprising a functional layer.
[5] The decorative film according to any one of [3] to [4], further comprising a cohesive layer or an adhesive layer.
[6] The decorative film according to any one of [3] to [5], further comprising a decorative layer.
[7] A decorated shaped product comprising a base material to be decorated and the decorative film according to any one of [3] to [6] laminated on the surface of the base material.
[8] A method for producing a decorated shaped product, the method comprising subjecting the decorative film according to any one of [3] to [6] to a transfer decorative forming or a laminating decorative forming on a base material to be decorated.
[9] The method according to [8], wherein the transfer decorative forming or the laminating decorative forming is an in-mold decorative molding or an out-mold decorative molding.

### ADVANTAGEOUS EFFECTS OF THE INVENTION

The base film for a decorative film of the present invention has a high heat-resistant temperature and is excellent in weather resistance. The base film for a decorative film of the present invention faithfully can be brought into close contact with conforming to the surface shape of the base material to be decorated without causing cracks, tears, blisters, surface roughness, etc. at the time of laminating base material or transfer decorative forming. The decorative film of the present invention has a cured film having high close-fitting, high surface hardness, and no wrinkles nor cracks.

### BRIEF DESCRIPTION OF THE DRAWINGS

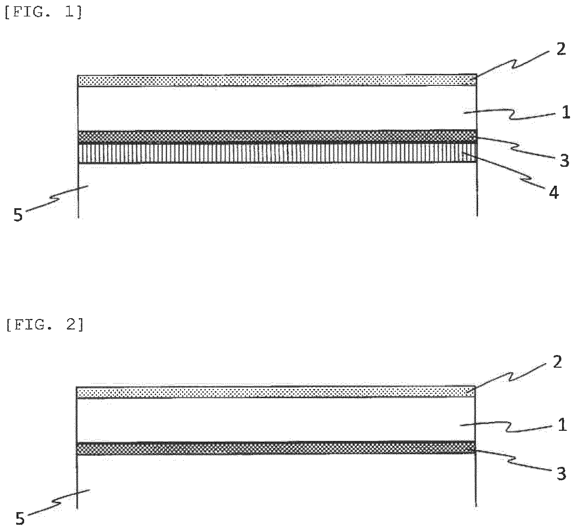

[FIG. 1] is a figure which shows an example of the shaped product by vacuum-forming for decoration on base material to be decorated using the decorative film of the present invention.
[FIG. 2] is a figure which shows an example of the shaped product by insert molding for decoration on base material to be decorated using the decorative film of the present invention.

### EMBODIMENTS FOR CARRYING OUT THE INVENTION

[BASE FILM FOR DECORATIVE FILM]

The base film for a decorative film of the present invention comprises a resin composition. The decorative film of the present invention comprises the above base film. The resin composition used in the present invention comprises a resin [1] and crosslinked rubber particles.

The resin [1] is a polymer mainly comprising a methacrylic acid ester unit. The amount of the methacrylic acid ester unit comprised in the resin [1] is preferably 90% by mass or more, more preferably 93% by mass or more, further preferably 95% by mass or more, still more preferably 98% by mass or more, and most preferably 100% by mass with respect to all the units comprised in the resin [1].

Examples of the methacrylic acid ester can include an alkyl methacrylate ester such as methyl methacrylate, ethyl methacrylate and butyl methacrylate; an aryl methacrylate ester such as phenyl methacrylate; a cycloalkyl methacrylate ester such as cyclohexyl methacrylate and norbornyl methacrylate, and the like. Of these, an alkyl methacrylate ester is preferred, and methyl methacrylate is most preferred.

The resin [1] may further comprise another monomer unit other than the methacrylic acid ester unit. As the other monomer, mentioned can be a monomer having only one polymerizable carbon-carbon double bond in one molecule. Examples of the other monomer can include an alkyl acrylate ester such as methyl acrylate, ethyl acrylate, propyl acrylate, butyl acrylate, and 2-ethylhexyl acrylate; an aryl acrylate ester such as phenyl acrylate; a cycloalkyl acrylate ester such as cyclohexyl acrylate, and norbornyl acrylate; an aromatic vinyl compound such as styrene and α-methyl styrene; acrylamide; methacrylamide; acrylonitrile; methacrylonitrile; and the like.

The resin [1] preferably does not have a ring structure in the main chain. Examples of the ring structure can include a lactone ring unit, a glutaric anhydride unit, an N-substituted or unsubstituted glutarimide unit, a maleic anhydride unit, an N-substituted maleimide unit, a tetrahydropyran ring unit, a norbornene ring unit, and the like, which will be described later.

The resin [1] used in the present invention has a triad syndiotacticity (rr) of preferably 56% or more, more preferably 60% or more, still more preferably 63% or more. The upper limit of the triad syndiotacticity (rr) of the resin [1] is preferably 99%, more preferably 95%, still more preferably 90%, and most preferably 85%.

Triad syndiotacticity (rr) is a ratio of a pair of two racemos (denoted as rr) in a set of three consecutive structural units (triple, triad). In a polymer molecular chain, a set of two consecutive structural units (doubles, diad) having the different configuration are referred to as racemo, and that having the same configuration are referred to as meso, which are referred to as r and m, respectively.

Triad syndiotacticity (rr) (%) can be determined by formula: $(X / Y) \times 100$. X is a square measure of a region of 0.6 to 0.95 ppm, and Y is a square measure of a region of 0.6 to 1.35 ppm in a $^1$H-NMR spectrum when TMS is 0 ppm. The $^1$H-NMR spectrum is measured at 30 °C in deuterated chloroform.

The resin [1] has a weight average molecular weight Mw of preferably 30,000 to 200,000, more preferably 50,000 to 150,000, and even more preferably 60,000 to 120,000. The weight average molecular weight of the resin [1] is preferably in the above range from the viewpoints of impact resistance, toughness, tensile strength and the like.

A ratio of the weight average molecular weight to a number average molecular weight of the resin [1] is preferably 1.01 to 5.0, more preferably 1.05 to 3.5. The number average molecular weight and the weight average molecular weight are values obtained by converting a chromatogram measured by gel permeation chromatography (GPC) into the molecular weight of standard polystyrene.

The resin [1] has a melt flow rate (MFR) of preferably 0.1 to 20 g/10min, more preferably 0.5 to 15 g/10min, still more preferably 1.0 to 10 g/10min as measured in accordance with JIS K7210 at a temperature of 230 °C and a load of 3.8 kg.

The resin [1] has a glass transition temperature of preferably 122 °C or higher, more preferably 123 °C or higher, and even more preferably 124 °C or higher. The upper limit of the glass transition temperature of the resin [1] is usually 130 °C. The "glass transition temperature (Tg)" is measured in accordance with JIS K7121. Specifically, the sample is heated to 230 °C and then cooled to room temperature. Then, the temperature is raised from room temperature to 230 °C at 10 °C/min. An intermediate point obtained from a DSC curve measured during the second temperature rise was defined as the "glass transition temperature (Tg)".

The flexural modulus of the resin [1] is preferably 3200 MPa or less, more preferably 3150 MPa or less, still more preferably 3100 MPa or less, and particularly preferably 3000 MPa or less.

The resin [1] is not limited by the production method thereof, and can be obtained by, for example, a controlled radical polymerization (precision radical polymerization) method, an anionic polymerization method, a group transfer polymerization method, or the like. Polymerization can be roughly classified into bulk polymerization, solution polymerization, suspension polymerization, emulsion polymerization and the like depending on the form of the reaction solution. Among these, the anionic polymerization method is preferable and an anionic solution polymerization method is more preferable, from the viewpoints of high productivity, excellent resistance to thermal decomposition, few foreign substances, few dimers and trimers, and excellent appearance of the obtained shaped product. In the anion polymerization method, the polymerization temperature, the polymerization time period, the type and amount of the chain transfer agent, the type and amount of the polymerization initiator, and the like can be appropriately selected in order to obtain desired characteristics.

As an anionic polymerization method for producing the resin [1], for example, mentioned can be a method of anionic polymerization using an organic alkali metal compound as a polymerization initiator in the presence of a mineral acid salt such as an alkali metal salt or an alkaline earth metal salt (see JP H07-25859 A), a method of anionic polymerization using an organic alkali metal compound as a polymerization initiator in the presence of an organic aluminum compound (see JP H11-335432 A), a method of anionic polymerization using an organic rare-earth metal complex as polymerization initiator (see JP H06-93060 A).

In the anion polymerization method for producing the resin [1], it is preferable to use alkyllithium such as n-butyllithium, sec-butyllithium, isobutyllithium and tert-butyllithium as the polymerization initiator. Further, from the viewpoint of productivity, it is preferable that the organic aluminum compound coexists. Examples of the organic aluminum compound can include compounds represented by $AlR^aR^bR^c$ (in the formula, $R^a$, $R^b$ and $R^c$ are independently a substituted or unsubstituted alkyl group, a substituted or unsubstituted cycloalkyl group, a substituted or substituted aryl group, a substituted or unsubstituted aralkyl group, a substituted or unsubstituted alkoxyl group, a substituted or unsubstituted aryloxy group or an N,N-di-substituted amino group. Further, $R^b$ and $R^c$ may be a substituent composed of them together, for example, an arylene-di-oxy group). Specific examples of organic aluminum compounds can include isobutyl bis (2,6-di-tert-butyl-4-methylphenoxy) aluminum, isobutyl bis (2,6-di-tert-butylphenoxy) aluminum, and isobutyl [2,2'-methylene bis (4-methyl-6-tert-butylphenoxy)] aluminum and the like. Further, in the anionic polymerization method, ether, a nitrogen-containing compound, or the like can coexist in order to control the polymerization reaction.

The resin [1] may be obtained by kneading two or more different types of methacrylic resins so as to adjust various physical properties such as a triad syndiotacticity (rr) value, a content of methacrylic acid ester units and the others within the above ranges. For example, the resin [1] may be obtained by kneading a methacrylic resin having a triad syndiotacticity (rr) of less than 56% and a methacrylic resin having a triad syndiotacticity (rr) of 56% or more.

The amount of the resin [1] comprised in the resin composition is preferably 90 to 50% by mass, more preferably 85 to 65% by mass, still more preferably 80 to 60% by mass, further preferably 75 to 65% by mass, based on the resin composition.

The crosslinked rubber particles are preferably multilayer copolymer rubber particles comprising an acrylic acid ester unit. As the multilayer copolymer rubber particles, those described in JP 2004-352837 A can be used.

As the multilayer copolymer rubber particles, mentioned can be those composed of an outermost layer made of a thermoplastic polymer (III) and an inner layer made of a crosslinked polymer in contact with and covered with the outermost layer.

Examples of the multilayer copolymer rubber particles can include a two-layer polymer rubber particle composed of a core (inner layer) comprising a crosslinked rubber polymer (II) and an outer shell (outermost layer) comprising a thermoplastic polymer (III), a three-layer polymer rubber particle composed of a core (inner layer) comprising a cross-linked polymer (I), an inner shell (inner layer) comprising a cross-linked rubber polymer (II), and an outer shell (outermost layer) comprising a thermoplastic polymer (III), and a four-layer polymer rubber particle composed of a core (inner layer) comprising a crosslinked rubber polymer (II), a first inner shell (inner layer) comprising a crosslinked polymer (I), a second inner shell (inner layer) comprising a crosslinked rubber polymer (II), and an outer shell (outermost layer) comprising a thermoplastic polymer (III), and the like.

From the viewpoint of transparency, It is preferable to select polymers to be comprised in each layer so that the difference in refractive index between adjacent layers is preferably less than 0.005, more preferably less than 0.004, and even more preferably less than 0.003.

The mass ratio of the inner layer / outermost layer in the multilayer copolymer rubber particles is preferably 50/50 to 65/35, more preferably 55/45 to 63/37.

The multilayer copolymer rubber particles have an average particle diameter of preferably 0.05 to 0.3 $\mu$m, more preferably 0.08 to 0.25 $\mu$m, and further preferably 0.08 to 0.13 $\mu$m. The particle diameter can be measured by a known method such as electron microscope observation and dynamic light scattering measurement. For measurement by electron microscope observation, for example, a specific layer of multilayer structure rubber particles (RP) is selectively stained by an electron staining method, the particle diameters are actually measured using a transmission electron microscope (TEM) or a scanning electron microscope (SEM), and the average value of the measured values is obtained. The dynamic light scattering method is a measurement method that utilizes the principle that the Brownian motion of a particle increases as the particle diameter increases.

The thermoplastic polymer (III) is a polymer composed of a methyl methacrylate unit and optionally a unit of a monofunctional monomer other than methyl methacrylate. The thermoplastic polymer (III) preferably does not comprise a polyfunctional monomer unit.

The amount of the methyl methacrylate unit constituting the thermoplastic polymer (III) is preferably 80 to 100% by mass, more preferably 85 to 100% by mass, still more preferably 90 to 100% by mass, based on the mass of the thermoplastic polymer (III).

The amount of the unit of the monofunctional monomer other than methyl methacrylate constituting the thermoplastic polymer (III) is preferably 0 to 20% by mass, more preferably 0 to 15% by mass, further preferably 0 to 10% by mass, based on the mass of the thermoplastic polymer (III).

Examples of the monofunctional monomer other than methyl methacrylate can include methacrylic acid alkyl esters in which the alkyl has 2 to 8 carbon atoms such as ethyl methacrylate, butyl methacrylate, 2-ethylhexyl methacrylate, propyl methacrylate, and cyclohexyl methacrylate; acrylic acid esters such as methyl acrylate, ethyl acrylate, butyl acrylate, 2-ethylhexyl acrylate, propyl acrylate; aromatic vinyl compounds such as styrene, p-methylstyrene, $\alpha$-methylstyrene; N-propylmaleimide , N-cyclohexylmaleimide, N-o-chlorophenylmaleimide and other maleimide compounds.

The outermost layer may be a single layer made of one type of thermoplastic polymer (III) or a multi-layer made of two or more types of thermoplastic polymer (III).

The amount of the thermoplastic polymer (III) is preferably 35 to 50% by mass, more preferably 37 to 45% by mass, based on the amount of the multilayer copolymer rubber particles.

The crosslinked elastic layer, which is an inner layer, has an intermediate layer made of the crosslinked rubber polymer (II) and an innermost layer made of the crosslinked polymer (I) and covered in contact with the intermediate layer. As for the crosslinked elastic layer, it is preferable that the innermost layer and the intermediate layer form a core and a shell.

The crosslinked polymer (I) is composed of a methyl methacrylate unit, a unit of a monofunctional monomer other than methyl methacrylate, and a polyfunctional monomer unit.

The amount of the methyl methacrylate unit constituting the crosslinked polymer (I) is preferably 80 to 99.99% by mass, more preferably 85 to 99% by mass, still more preferably 90 to 98% by mass, based on the mass of the crosslinked polymer (I) .

The amount of the unit of the monofunctional monomer other than methyl methacrylate constituting the crosslinked polymer (I) is 0 to 20% by mass, preferably 0.9 to 15% by mass, more preferably 1.9 to 10% by mass, based on the mass of the crosslinked polymer (I).

Examples of the monofunctional monomer other than methyl methacrylate can include methacrylic acid ester other than methyl methacrylate such as ethyl methacrylate, butyl methacrylate and cyclohexyl methacrylate; acrylic acid esters such as methyl acrylate, ethyl acrylate, butyl acrylate, 2-ethylhexyl acrylate, and propyl acrylate; aromatic vinyl compounds such as styrene, p-methylstyrene and $\alpha$-methylstyrene; maleimide compounds such as N-propylmaleimide, N-cyclohexylmaleimide and N-o-chlorophenylmaleimide.

The amount of the polyfunctional monomer unit constituting the crosslinked polymer (I) is preferably 0.01 to 1.5% by mass, more preferably 0.05 to 1% by mass, based on the mass of the crosslinked polymer (I).

Examples of the polyfunctional monomer can include ethylene glycol dimethacrylate, propylene glycol dimethacrylate, triethylene glycol dimethacrylate, butylene glycol dimethacrylate, hexanediol dimethacrylate, ethylene glycol diacrylate, propylene glycol diacrylate, triethylene glycol diacrylate, butylene glycol diacrylate, hexanediol diacrylate; allyl methacrylate, triallyl isocyanurate; allyl acrylate, methallyl acrylate, methallyl methacrylate, allyl cinnamate, methallyl cinnamate, diallyl maleate, diallyl phthalate, diallyl terephthalate, diallyl isophthalate, and divinylbenzene.

The innermost layer may be a single layer made of one kind of crosslinked polymer (I) or a multi-layer made of two or more types of crosslinked polymers (I).

The amount of the crosslinked polymer (I) is preferably 0 to 15% by mass, more preferably 7 to 13% by mass, based on the amount of the multilayer copolymer rubber particles.

The innermost layer made of the crosslinked polymer (I) can be preferably a multi-layer composed of two or more types of the crosslinked polymers (I) so as to have functions such as controlling the flexibility of the crosslinked elastic layer and storing low molecular weight additives such as an ultraviolet absorber.

The crosslinked rubber polymer (II) is composed of an acrylic acid alkyl ester unit having 6 to 12 carbon atoms, other monofunctional monomer unit and polyfunctional monomer unit.

The amount of the acrylic acid alkyl ester unit having 6 to 12 carbon atoms constituting the crosslinked rubber polymer (II) is preferably 70 to 99.8% by mass, more preferably 75 to 90% by mass, further preferably 78 to 86% by mass, based on the mass of the crosslinked rubber polymer (II).

Examples of the acrylic acid alkyl ester having 6 to 12 carbon atoms can include propyl acrylate, isopropyl acrylate, n-butyl acrylate, isobutyl acrylate, 2-ethylhexyl acrylate, pentyl acrylate, and hexyl acrylate.

The amount of the polyfunctional monomer unit constituting the crosslinked rubber polymer (II) is preferably 0.2 to 1.7% by mass, more preferably 1.2 to 1.6% by mass, still more preferably 1.3 to 1.5% by mass, based on the mass of the crosslinked rubber polymer (II).

Examples of the polyfunctional monomer can include ethylene glycol dimethacrylate, propylene glycol dimethacrylate, triethylene glycol dimethacrylate, butylene glycol dimethacrylate, hexanediol dimethacrylate, ethylene glycol diacrylate, propylene glycol diacrylate, triethylene glycol diacrylate, butylene glycol diacrylate, hexanediol diacrylate; allyl methacrylate, triallyl isocyanurate; allyl acrylate, methallyl acrylate, methallyl methacrylate, allyl cinnamate, methallyl cinnamate, diallyl maleate, diallyl phthalate, diallyl terephthalate, diallyl isophthalate, and divinylbenzene.

From the viewpoint of improving bending resistance, the ratio of the mass of the polyfunctional monomer unit in the crosslinked polymer (I) to the mass of the polyfunctional monomer unit in the crosslinked rubber polymer (II) is preferably 0.05 to 0.25, more preferably 0.1 to 0.2. The glass transition temperature of the crosslinked rubber polymer (II) is preferably lower than the glass transition temperature of the crosslinked polymer (I).

The intermediate layer may be a single layer made of one type of the crosslinked rubber polymer (II) or a multilayer made of two or more types of the crosslinked rubber polymer (II).

The amount of the crosslinked rubber polymer (II) is preferably 40 to 60% by mass, more preferably 45 to 55% by mass, based on the amount of the multilayer copolymer rubber particles.

The intermediate layer made of the crosslinked rubber polymer (II) mainly has a role of imparting flexibility to the resin composition of the present invention.

It is preferable that the molecular chains of the crosslinked polymer (I) constituting the innermost layer and the crosslinked rubber polymer (II) constituting the intermediate layer are connected by a graft bond. Further, it is preferable that the molecular chains of the crosslinked rubber polymer (II) constituting the intermediate layer and the thermoplastic polymer (III) constituting the outermost layer are connected by a graft bond. The graft bond is generated by a polymerization method (graft polymerization method) in which a substituent bonded to the main chain of the already completed polymer is used as a reaction active site and a branch portion is newly extended from the active site. The graft bond is a bond that connects the main chain and the branch part.

In the multilayer copolymer rubber particles, the average diameter (d) of the crosslinked elastic layer is preferably 50 to 300 nm, more preferably 65 to 250 nm, and further preferably 70 to 130 nm.

The average diameter d (nm) of the crosslinked elastic layer can be measured as follows. Using a hydraulic press shaping machine, the resin composition containing the multilayer copolymer rubber particles is shaped into a 3 mm-thick flat plate under the conditions of a mold size of 50 mm × 120 mm, a press temperature of 250 °C, a preheating time of 3 minutes, a press pressure of 50 kg/cm$^2$, a press time of 30 seconds, a cooling temperature of 20 °C, a pressure during cooling of 50 kg/cm$^2$, and a cooling time of 10 minutes. Using a microtome, the obtained flat plate is cut at -100 °C in a direction parallel to the long side to obtain flakes having a thickness of 40 nm, and the flakes are dyed with ruthenium. The dyed flakes are observed with a scanning transmission electron microscope (JSM7600F manufactured by JEOL Ltd.) at an acceleration voltage of 25 kV and a photograph is taken.

The minor diameter and major diameter of at least twenty ruthenium-stained parts (exposed section of the crosslinked elastic layer) are measured respectively, and considering the diameter of each the crosslinked elastic layer as (minor axis + major axis) / 2, and the number average value (average diameter) is calculated.

The multilayer copolymer rubber particles have a graft ratio of preferably 33 to 50% by mass, more preferably 35 to 48% by mass, and further preferably 40 to 45% by mass. As the graft ratio decreases, the crosslinked elastic layer tends to be more flexible, and the tensile elongation and the bending resistance tend to be enhanced. As the graft ratio increases, the elasticity and the transparency of the crosslinked elastic layer tend to be enhanced.

The graft ratio can be adjusted by controlling the polyfunctional monomer unit in the crosslinked rubber polymer (II). For example, a polyfunctional monomer having a double bond equivalent of preferably 50 to 250, more preferably 60 to 200 is employed for the crosslinked rubber polymer (II), and the amount of the above functional monomer unit consisting the crosslinked rubber polymer (II) is set to preferably 0.6 to 3.0% by mass, more preferably 0.8 to 2.0% by mass, still more preferably 1.0 to 1.7% by mass based on the mass of the crosslinked rubber polymer (II). The double bond equivalent is a value obtained by dividing the molecular weight of the polyfunctional monomer by the number of double bonds present in one molecule of the polyfunctional monomer.

The graft ratio is calculated by the following formula, wherein $w_1$ is the mass of the acetone insoluble matter in the multilayer copolymer rubber particles, $w_0$ is the mass of the multilayer copolymer, and R is a ratio of the total mass of the crosslinked polymer (I) and the crosslinked rubber polymer (II) with respect to $W_0$.

$$\text{Graft ratio} = 100 \times [w_1 - w_0 \times R] / [w_0 \times R]$$

The multilayer copolymer rubber particles are not particularly limited depending on the production method thereof. For example, emulsion polymerization and the like can be mentioned.

In the case of emulsion polymerization, for example, the following can be done. The monomer (i) for forming the crosslinked polymer (I) is emulsion-polymerized to obtain a latex containing the crosslinked polymer (I), the monomer (ii) for forming the crosslinked rubber polymer (II) is added to this, the monomer (ii) is seed-emulsion-polymerized to obtain a latex containing the crosslinked polymer (I) and the crosslinked rubber polymer (II), the monomer (iii) for forming the thermoplastic polymer (III) is added thereto, and the monomer (iii) is seed-emulsion-polymerized to obtain a latex containing the multilayer copolymer rubber particles. Emulsion polymerization is a known method used to obtain a latex containing a polymer. Seed emulsion polymerization is a method in which polymerization reaction of a monomer is carried out on the surface of seed particles. Seed emulsion polymerization is preferably used to obtain core-shell structural polymer particles.

The polymerization initiator used in the emulsion polymerization and the seed emulsion polymerization is not particularly limited. Examples of the polymerization initiator can include water-soluble inorganic initiators such as potassium persulfate and ammonium persulfate; redox initiators obtained by using an inorganic initiator in combination with sulfite or thiosulfate; and redox initiators obtained by using organic peroxides in combination with a ferrous salt or sodium sulfoxylate. The polymerization initiator may be added to the reaction system all at once at the start of polymerization, or may be added to the reaction system separately at the start of polymerization and during the polymerization in consideration of the reaction rate and the like.

The emulsifier used in the emulsion polymerization and the seed emulsion polymerization is not particularly limited.

Examples of the emulsifier can include dialkyl sulfosuccinates such as sodium dioctyl sulfosuccinate and sodium dilauryl sulfosuccinate, alkylbenzene sulfonates such as sodium dodecylbenzene sulfonate, and alkyl sulfates such as sodium dodecyl sulfate, which are anionic emulsifiers; polyoxyethylene alkyl ether and polyoxyethylene nonylphenyl ether, which are nonionic emulsifiers; polyoxyethylene nonylphenyl ether sulfates such as sodium polyoxyethylene nonylphenyl ether sulfate, polyoxyethylene alkyl ether sulfate such as sodium polyoxyethylene alkyl ether sulfate, and alkyl ether carboxylate such as sodium polyoxyethylene tridecyl ether acetate, which are nonionic-anionic emulsifiers.

The number of moles of oxyethylene structural units in the nonionic emulsifiers and the nonionic-anionic emulsifiers is preferably 30 mol or less, more preferably 20 mol or less, and most preferably 10 mol or less in order to prevent the foaming property of the emulsifier from becoming extremely large. These emulsifiers can be used alone or in combination of two or more.

The amount of the polymerization initiator and the emulsifier used can be appropriately set so that the average particle diameter (D) of the multilayer copolymer rubber particles contained in the latex is within a desired range. The amount of the emulsifier used varies depending on the type of emulsifier, but for example, it is preferably 0.5 to 3 parts by mass, more preferably 1 to 2 parts by mass based on 100 parts by mass of the total amount of the monomers for producing the multilayer copolymer rubber particles.

The average particle diameter (D) of the multilayer copolymer rubber particles contained in the latex is preferably 80 nm or more and 150 nm or less, and more preferably 90 nm or more and 120 nm or less. If the average particle diameter D of the multilayer copolymer rubber particles is too small, the viscosity of the latex tends to increase. If the average particle diameter D of the multilayer copolymer rubber particles is too large, the stress whitening resistance tends to decrease.

The average particle diameter D of the multilayer copolymer rubber particles contained in the latex can be determined as follows. The latex containing the multilayer copolymer rubber particles is diluted with ion-exchanged water so as to have a concentration of 0.05% by mass, and the obtained diluted solution is thinly cast on a support plate and dried. A gold-palladium alloy is vapor-deposited on the dried product, the resultant is observed with a scanning transmission electron microscope (JSM7600F, manufactured by JEOL Ltd.) to determine the number average particle diameter.

In the present invention, the emulsion polymerization of the monomer (i), the seed emulsion polymerization of the monomer (ii) and the seed emulsion polymerization of the monomer (iii) may be sequentially carried out in one polymerization tank. The polymerization tank may be changed each time the emulsion polymerization of the monomer (i), the seed emulsion polymerization of the monomer (ii), and the seed emulsion polymerization of the monomer (iii) are carried out in sequence. In the present invention, it is preferable to carry out each polymerization sequentially in one polymerization tank. The temperature of the reaction system during the polymerization is preferably 30 to 120 °C, more preferably 50 to 100 °C.

Further, in any of the emulsion polymerization of the monomer (i), the seed emulsion polymerization of the monomer (ii) and the seed emulsion polymerization of the monomer (iii), if necessary, a reactive ultraviolet absorber, for example, 2- [2-hydroxy-5- (2-methacryloyloxyethyl) phenyl] -2H-1,2,3-benzotriazole and the like can be added. A reactive ultraviolet absorber is introduced into the molecular chain of the multilayer copolymer rubber particles to improve the ultraviolet resistance of the multilayer copolymer rubber particles. The amount of the reactive ultraviolet absorber added is preferably 0.05 to 5 parts by mass with respect to 100 parts by mass of the total amount of the monomers used for producing the multilayer copolymer rubber particles.

Chain transfer agents can be used in each polymerization for the regulation of molecular weight. The chain transfer agent used for each polymerization is not particularly limited. Examples of the chain transfer agent can include alkyl mercaptans such as n-octyl mercaptan, n-dodecyl mercaptan, t-dodecyl mercaptan, and n-hexadecyl mercaptan; xanthogen disulfides such as dimethyl xanthogen disulfide and diethyl xanthogen disulfide; thiuram disulfides such as tetrathiuram disulfide; halogenated hydrocarbons such as carbon tetrachloride, ethylene bromide and the like. The amount of the chain transfer agent used can be appropriately set within a range in which each of the polymers (I), (II), and (III) can be adjusted to a predetermined molecular weight. The amount of the chain transfer agent used in the seed emulsion polymerization of the monomer (iii) can be appropriately set so that the multilayer copolymer rubber particles have a desired melt flow rate. The suitable amount of the chain transfer agent used in each polymerization depends on the amount of the polymerization initiator used in the polymerization and the like. The amount of the chain transfer agent used in the seed emulsion polymerization of the monomer (iii) is preferably 0.05 to 2 parts by mass, more preferably 0.08 to 1 part by mass with respect to 100 parts by mass of the monomer (iii).

Next, the latex obtained by the above polymerization is coagulated. The coagulation of the latex can be performed by a known method. Examples of the coagulation method can include a freeze coagulation method, a salt coagulation method, and an acid coagulation method. Of these, the freeze-coagulation method that does not require the addition of a coagulant as an impurity or the salt coagulation method that can be washed is preferable from the viewpoint that a coagulated product with few impurities can be obtained. Latex spray drying can also be used instead of latex coagulation. Before coagulating or spray-drying the latex, it is preferable to filter the latex with a wire mesh having a mesh size of 50 μm or less in order to remove foreign substances.

The slurry obtained by coagulation is washed if necessary and then dewatered. It is preferable to repeat washing and dewatering so that the characteristics of the multilayer copolymer are within a desired range. Water-soluble components such as emulsifiers and catalysts can be removed from the slurry by washing and dewatering the slurry. The washing and dewatering of the slurry can be carried out by, for example, a filter press, a belt press, a Gina type centrifuge, a screw decanter type centrifuge or the like. From the viewpoint of productivity and cleaning efficiency, it is preferable to use a decanter type centrifugal dewaterer. The slurry is preferably washed and dewatered at least twice. As the number of washing and dewatering increases, the residual amount of water-soluble components decreases. However, from the viewpoint of productivity, the number of washings and dewaterings is preferably 3 times or less.

The coagulated multilayer copolymer rubber particles have an average diameter of preferably 0.05 to 1 μm, more preferably 0.07 to 0.5 μm, and even more preferably 0.1 to 0.4 μm.

Dewatering is carried out so that the water content of the slurry is preferably less than 0.3% by mass, more preferably less than 0.2% by mass. Drying of the dewatered slurry is preferably carried out at a temperature of 40 to 80 °C in order to further reduce the water content while preventing deterioration of the polymer. The dewatered slurry is dried over an average residence time of preferably 0.5 to 5 hours, more preferably 1 to 3 hours. As the water content after dewatering and drying decreases, the warm water whitening resistance and boiling water whitening resistance tend to be enhanced. It is preferable to take out the multilayer copolymer rubber particles as agglomerated particles of preferably 1000 μm or less, and as agglomerated particles of more preferably 500 μm or less. The form of the agglomerated particles is not particularly limited, and for example, it may be in the form of pellets in a state of being fused to each other in the outermost layer portion, or may be in the form of powder or granule.

The resin composition of the present invention satisfies the following formula:

$$1.2 \leq rr/c \leq 5.0$$

wherein, rr is a value expressed as a percentage of the triad syndiotacticity (rr) of the resin [1], and c is a value expressed as a percentage of the mass ratio of the crosslinked rubber particles to the resin composition. The resin composition of the present invention has an rr/c of 1.2 or more and 5 or less, preferably 1.3 or more and 4.5 or less, and more preferably 1.5 or more and 4 or less.

The amount of the crosslinked rubber particles contained in the resin composition is preferably 10 to 50% by mass, more preferably 15 to 45% by mass, further preferably 20 to 40% by mass, still more preferably 25 to 35% by mass, based on the resin composition. Further, the mass ratio of the resin [1] / crosslinked rubber particles in the resin composition is preferably 50/50 to 90/10, more preferably 55/45 to 85/15, and further preferably 60/40 to 80/20, still more preferably 65/35 to 75/25.

Particles for dispersion (D) can be used in order to suppress a decrease in handleability due to sticking of the multi-layer copolymer rubber particles and a decrease in impact resistance due to poor dispersion during melt-kneading. To use the particles for dispersion, they can be mixed with a latex containing the multilayer copolymer rubber particles or a powder of the multilayer copolymer rubber particles. The particles for dispersion (D) are, for example, preferably composed of a polymer mainly comprising a methyl methacrylate unit and having a particle diameter relatively smaller than that of the multilayer copolymer rubber particles. The particle diameter of the particles for dispersion (D) is preferably as small as possible, preferably 40 to 120 nm, and more preferably 50 to 100 nm from the viewpoint of enhancing dispersibility. The amount of the particles for dispersion (D) is preferably 10 to 50% by mass, more preferably 20 to 40% by mass, based on the total amount of the multilayer copolymer rubber particles and the particles for dispersion (D) from the viewpoint of the effect of improving dispersibility.

The resin composition can comprise additives within a range that does not deviate from the gist of the present invention. As the additives, mentioned can be, for example, colorants, antioxidants, stabilizers, UV absorbers, lubricants, processing aids, antistatic agents, colorants, impact resistant aids, foaming agents, fillers, delustrant and the like.

The resin composition has a melt flow rate (MFR) of preferably 0.1 to 10 g/10min, more preferably 0.5 to 7 g/10min, and even more preferably 1 to 4 g/10min. MFR is a value measured using a melt indexer at a temperature of 230 °C under a load of 3.8 kg.

The base film for a decorative film of the present invention can be obtained by film-shaping the above-mentioned resin composition with a known method. A preferred example of the film shaping method is an extrusion method. In particular, an extrusion method using a T-die has high productivity of the base film.

Polymer filters can be used in the preparation of resin compositions and film shaping. The method comprising the step of passing the molten resin through the polymer filter is not particularly limited, and a known method can be employed. The polymer filter used in the process of melt-kneading the thermoplastic resin or the process of manufacturing the film may be a leaf-type polymer filter or a pleat-type polymer filter. In particular, it is preferable to pass through a pleated polymer filter. The opening of the polymer filter is not particularly limited as long as it is 5 to 40 $\mu$m.

The base film for a decorative film of the present invention has an average thickness of preferably 30 to 1000 $\mu$m, more preferably 50 to 700 $\mu$m, and even more preferably 70 to 650 $\mu$m.

The decorative film for laminating of the present invention may further comprise a cohesive or adhesive layer and / or a decorative layer in addition to the base film. The decorative film for transfer of the present invention may further comprise a release layer, a cohesive or adhesive layer, and / or a decorative layer in addition to the base film. The decorative film of the present invention has a total average thickness of preferably 50 to 1200 $\mu$m, more preferably 70 to 900 $\mu$m, and even more preferably 90 to 850 $\mu$m.

[Cohesive or Adhesive layer]

The cohesive or adhesive layer is for cohering or adhering the decorative film to the base material to be decorated. The cohesive or adhesive layer usually comprises a cohesive material or an adhesive material. The cohesive or adhesive material may be photosensitive, heat-sensitive, or pressure-sensitive.

Examples of the cohesive or adhesive material can include rubber cohesive materials, rubber adhesive materials, acrylic cohesive materials, acrylic adhesive materials, silicone cohesive materials, silicone adhesive materials, urethane cohesive materials, urethane adhesive materials, etc. They can be used properly according to the type of base material to be decorated and the purpose. The rubber cohesive material or rubber adhesive material is composed of natural rubber or synthetic rubber and an as needed tackifier. The acrylic cohesive material or acrylic adhesive material is composed of a copolymer mainly comprising an acrylic acid ester unit. The acrylic cohesive material or acrylic adhesive material is excellent in transparency, weather resistance, heat resistance, solvent resistance and the like. The silicone cohesive material or silicone adhesive material is composed of a silicone rubber and an as needed silicone resin and / or an as needed crosslinking agent (benzoyl peroxide, etc.). The silicone cohesive material or silicone adhesive material is excellent in cold resistance and heat resistance. The urethane cohesive material or the urethane adhesive material is composed of a urethane resin. The urethane cohesive material or urethane adhesive material has excellent repeelability.

In the present invention, it is preferable to use an aliphatic polyamide, a dimer acid-modified epoxy resin, an NBR (acrylonitrile butadiene rubber)-modified epoxy resin, an epoxy resin, or an acrylic cohesive resin as the cohesive material or adhesive material. As the acrylic cohesive resin, an acrylic block copolymer can be employed. Examples of the acrylic block copolymer can include an acrylic block copolymer, as described in WO 2016/140285 A1, composed of a polymer block comprising a (meth)acrylic acid ester unit and a polymer block (B) comprising a (meth)acrylic acid unit (b) and an N-substituted (meth)acrylamide unit (c) .

The cohesive or adhesive layer has a thickness of preferably 5 to 100 $\mu$m, more preferably 10 to 50 $\mu$m. The cohesive or adhesive layer can be formed by methods such as co-extrusion, laminating, and coating. The cohesive or adhesive layer can be provided, if desired, on one or both sides of the base film, or on all or part of at least one side of the base film.

[Decorative layer]

The decorative layer is for changing the visual quality, appearance, sense, etc. of the base material to be decorated. The decorative layer contributes to visual decoration such as coloring, patterns, symbols, and characters, and tactile decoration such as profound feeling, luxury feeling, soft feeling, and touch feeling. The decorative layer can be formed by printing, plating, vapor deposition, painting, embossing, matting, or the like. The decorative layer can be provided, if necessary, on one or both sides of the base film, or on all or part of at least one side of the base film. When the decorative film is applied to the base material desired to be partially decorated, the decorative layer may be provided only on part of the base film corresponding to the desired part of the base material to be decorated.

[Release layer]

The release layer is usually used in a decorative film for transfer decoration. The release layer is preferably formed of a curable resin from the viewpoints of peelability, heat resistance, solvent resistance, topcoating property, drawing property and the like. Examples of the curable resin can include melamine resin, polyolefin resin, urethane resin, cellulose acetate, long-chain alkyl group-containing acrylic resin, silicone-modified acrylic resin, acrylic polyol resin, and polyisocyanate compound. The thickness of the release layer is not particularly limited, but is preferably 0.1 μm or more and 5 μm or less. The release layer may further comprise a resin filler or an inorganic filler in order to impart a function such as anti-glare. The release layer can be provided, if necessary, on one or both sides of the base film, or on all or part of at least one side of the base film.

[Functional layer]

The decorative film of the present invention may further comprise a functional layer.

The functional layer is used as needed to obtain a decorative film having various functions. As the functional layers, mentioned can be a hard coat layer, a self-healable anticorrosion layer, an antiglare layer, an antireflection layer, a reflection layer, a half mirror layer, a linearly polarizing layer, a circularly polarizing layer, a brightness enhancing layer, a retardation layer, an antifouling layer, an antistatic layer and an antibacterial layer. The functional layer can be provided, if desired, on one or both sides of the base film, or on all or part of at least one side of the base film. The functional layer can be formed by a method such as a coating method, a vapor deposition method or a sputtering method, depending on the material used.

The hard coat layer is often used in decorative films. The hard coat layer is usually provided on the outermost surface of the laminating decorative film. In the transfer decorative film, it is usually provided as a protective layer interposed between the release layer and the decorative layer. The hard coat layer is used to impart scuff resistance.

The hard coat layer can be formed of, for example, a heatcurable resin composition or a photocurable resin composition. Examples of the heatcurable resin composition can include resin compositions containing polyorganosiloxane materials, cross-linked acrylic materials, and the like. As an example of the photocurable resin composition, mentioned can be a resin composition in which a photopolymerization initiator is added as a curing catalyst to a resin composition composed of one or more monofunctional or polyfunctional acrylate monomers or oligomers. The curable resin composition can further contains organic solvents if necessary. In addition to organic solvents, various stabilizers such as ultraviolet absorbers, light stabilizers, and antioxidants; leveling agents, defoamers, thickeners, antistatic agents, and a surfactant such as an antifogging agent may be added to the curable resin composition.

As such curable resin composition, a commercially available hard coating agent for an acrylic resin can also be used. As an example of a hard coating agent for an acrylic resin, mentioned can be one comprising at least a photopolymerizable compound composed of tris (acryloyloxyethyl) isocyanurate, and a bifunctional and / or trifunctional (meth)acrylate compound copolymerizable therewith, and photopolymerization initiator.

The thickness of the hard coat layer is preferably 2 to 30 μm, more preferably 5 to 20 μm.

The anti-reflection layer can be obtained, for example, by forming a film having a refractive index lower than the refractive index of the base film on the base film, or by forming a film having a high refractive index on the base film and forming a film having a low refractive index on the film having a high refractive index. The thickness of the anti-reflection layer is preferably 80 to 200 nm, more preferably 100 to 150 nm.

The anti-glare layer usually forms irregularities on the surface to prevent glare. The anti-glare layer can be formed, for example, by using a curable resin composition comprising two kinds of materials that generate a phase-separated structure, or a curable resin composition containing dispersed fine particles. The thickness of the anti-glare layer is preferably 80 to 200 nm, more preferably 100 to 150 nm.

The hard coat layer can also have an anti-reflection function by giving the hard coat layer a relationship of refractive index as described above or anti-glare function by forming surface irregularities.

The decorated shaped product of the present invention comprises a base material to be decorated and the decorative film of the present invention laminated on the surface of the base material. The base material to be decorated is not particularly limited as long as the decorative film of the present invention can be applied. Examples of the base material to be decorated can include plate materials (building materials, etc.) such as flat plates and curved plates, three-dimensional articles (electric appliances, automobiles, trains, etc.), sheets, films, and the like. As materials that make up the base material to be decorated, mentioned can be wood fiber plates such as wood single plate, wood plywood, particle board, MDF (medium density fiber plate), metal materials such as iron and aluminum, ceramic materials such as glass, pottery and porcelain, non-cement ceramic materials such as gypsum, non-pottery nor porcelain materials such as ALC (lightweight cellular concrete) plates, resin materials such as acrylic resins, polyester resins, polystyrene resins, polyolefin resins such as polypropylene, ABS resins, polycarbonate resins, phenolic resin, vinyl chloride resin, cellulose resin and rubber.

The decorated shaped product can be obtained by a method comprising transfer decorative forming or laminating decorative forming of a decorative film of the present invention onto the base material to be decorated. The transfer decorative forming or the laminating decorative forming can be an in-mold decorative molding or an out-mold decorative molding.

Specific examples of the method for manufacturing the decorated shaped product can include a method comprising a step of vacuum forming to attach the decorative film to the surface of the base material to be decorated via a cohesive layer, and a method comprising a step of insert molding comprising injection of the molten resin to the base material side of the decorative film so as to adhere the decorative film onto the surface of the base material to be decorated.

As the vacuum forming, the TOM forming (Three dimension Overlay Method) is preferably employed. In the TOM forming, for example, the decorative film is fixed with a fixed frame to partition inside the device into two spaces and air inside both spaces of the device is evacuated by a vacuum pump or the like. At the same time, the film is heated with an infrared heater until it reaches a predetermined temperature at which the film softens, and at the timing when the film is heated and softened, the atmospheric air is sent into only one of the spaces in the device, which brings the film into close contact with the three-dimensional shape of the base material to be decorated under a vacuum atmosphere. After close contact of the film with the base material to be decorated, it is removed from the fixed frame to obtain a decorated shaped product. In vacuum forming, the surface temperature of the film is usually about 80 to about 150 °C, preferably about 110 to about 140 °C.

As the insert molding, mentioned can be, for example, a method in which a decorative film preformed is fixed to a mold by vacuum forming or the like, and a molten resin is injected from a direction other than the cured film layer side of the decorative film. The temperature of the molten resin depends on the melt viscosity of the resin used, but is usually 150 to 300 °C, preferably 180 to 280 °C.

The decorative film of the present invention can be suitably used for articles requiring design. It is suitably used for decoration of, for example, signboard parts such as advertising towers, stand signs, sleeve signs, column signs, roof signs; display parts such as showcases, dividers, and store displays; lighting parts such as fluorescent light covers, mood lighting covers, lamp shades, light ceilings, light walls and chandeliers; interior parts such as furniture, pendants, mirrors; building parts or materials such as doors, dome, security window glass, partitions, staircase wainscots, balcony wainscots, floorboards, roofs of leisure buildings, transport equipment-related parts such as automobile interior parts, automobile exterior parts such as bumpers; electronic equipment parts such as audiovisual nameplates, stereo covers, vending machines, mobile phones, personal computers, and in-vehicle displays; incubators, rulers, dial plate, greenhouses, large water tanks, box water tanks, bathroom parts, clock panels, bathtubs, sanitary, desk mats, game parts, toys, musical instruments, wallpaper; marking films, and various home electric appliances. The base film for a decorative film of the present invention is excellent in transparency and mechanical strength. The decorative film of the present invention may have both decoration and protection, that is a decorative layer may be formed only on the portion of the base film corresponding to a portion of the base material to be decorated desired to have decoration and no decorative layer can have to be formed on the portion of the base film corresponding to a portion of the base material to be decorated desired to have transparency, strength and the other so as to protect the portion of the base material.

Hereinafter, the present invention will be specifically described with reference to Examples and Comparative Examples, but the present invention is not limited to the following Examples. The evaluation methods for physical properties, etc. performed in this example are as follows.

(Weight average molecular weight Mw, weight average molecular weight Mw / number average molecular weight Mn)

The chromatogram was measured by gel permeation chromatography (GPC) under the following conditions, and the values converted to the molecular weight of standard polystyrene were collected. The baseline is a line connecting a point that the slope of the peak on the high molecular weight side of the GPC chart changes from zero to plus when viewed from the earliest retention time and a point that the slope of the peak on the low molecular weight side changes from minus to zero when viewed from the earliest retention time. GPC device: manufactured by Tosoh Corporation, HLC-8320

Detector: Differential refractometer detector Column: Two TSKgel SuperMultipore HZM-M manufactured by Tosoh Corporation and one Super HZ4000 manufactured by Tosoh Corporation connected in series.

Eluent: tetrahydrofuran
Eluent flow rate: 0.35 ml / min
Column temperature: 40 °C
Calibration curve: Created using data of 10 standard polystyrene points

(Content c of crosslinked rubber particles and content of acetone-soluble matter)

The base film was dried at about 80 °C for 12 hours or more. Then, about 0.7 g of a small piece was cut out and weighed precisely (W1). The piece were added in 80 mL of acetone. The resultant liquid was allowed to stand at room temperature for about 1 day.

The obtained suspension was placed in a centrifuge tube and centrifuged at 15,000 rpm for 5 minutes using a centrifuge manufactured by Kubota Seisakusho (table top, multi-frame centrifuge, 778011). The supernatant solution was removed by docantation. To that, 80 mL of acetone was newly added, and the mixture was allowed to stand at room temperature for 1 hour. Centrifugation and decantation were repeated 3 times in the same manner as above.

The obtained suspension was transferred to a beaker and heated using a hot plate at 80 °C to remove acetone. The mass of the obtained solid component was precisely weighed (W2).

The content c (% by mass) of the crosslinked rubber particles and the content (% by mass) of the acetone-soluble matter were calculated by the following formulae.

$$\text{Content of crosslinked rubber particles c (mass\%)}$$
$$= (\text{W2} / \text{W1}) \times 100$$

$$\text{Content of acetone-soluble matter (mass\%)}$$
$$= \{(\text{W1-W2}) / \text{W1}\} \times 100$$

(Triad syndiotacticity (rr))

The acetone-soluble matter of the base film was dissolved in deuterated chloroform, and the $^1$H-NMR spectrum was measured at room temperature and 64 times of integration using a nuclear magnetic resonance apparatus (ULTRA SHIELD 400 PLUS manufactured by Bruker). From the spectrum, a square measure A0 in the region of 0.6 to 0.95 ppm and a square measure AY in the region of 0.6 to 1.35 ppm were measured when TMS was set to 0 ppm, and then triad syndiotacticity (rr) was calculated by the formula: (A0 / AY) $\times$ 100.

(Glass transition temperature Tg)

In accordance with JIS K7121, using a differential scanning calorimetry device (manufactured by Shimadzu Corporation, DSC-50 (product number)), a DSC curve was measured under the condition that the temperature was first raised to 230 °C, then cooled to room temperature, and then was raised to 10 °C/min for the second time from room temperature to 230 °C. The intermediate point glass transition temperature obtained from the DSC curve measured at the time of the second temperature rise was defined as the glass transition temperature in the present invention.

(Volume average particle diameter of crosslinked rubber particles)

An ultrathin section was cut out from the base film using a diamond knife and stained with phosphotungstic acid. This stained the butyl acrylate moiety. Imaging was performed using a transmission electron microscope (TEM) ("JSM-7600" manufactured by JEOL Ltd.). Thirty multi-layered rubber particle (RP) images showing the entire particle were randomly selected, the diameter of the stained portion of each particle was measured, and the volume average particle diameter was calculated from the measured diameters.

(Surface hardness of base film)

Using a table-movable pencil scratch tester (model P) (manufactured by Toyo Seiki Co., Ltd.), the presence or absence of scratches was confirmed while pressing the pencil lead at an angle of 45 degrees and a load of 750 g against the surface of the base film. The hardness of the pencil lead was gradually increased, and the hardness of the lead, which was one step softer than the time when the scratch was generated, was defined as the pencil hardness.

(Weather resistance of base film)

Using an accelerated exposure tester (Eye Super UV Tester SUV-W161 (manufactured by Iwasaki Electric Co., Ltd.)) on the base film, light with a wavelength of 295 to 450 nm was irradiated for 113 hours (407 W / m$^2$) in an environment with a temperature of 60 °C and a relative humidity of 50%.

Before and after irradiation, the coordinates of the base film in the CIE L*a*b* color space (CIELAB) were measured, the color difference $\Delta E$ was calculated, and the evaluation was performed according to the following criteria.

A (good)   : $\Delta E$ <2.0
B (acceptable)  : $\Delta E$ <5.0
C (unacceptable) : $\Delta E$ <7.0

(Shapeability, surface roughness and toughness of Base film)

Five 300 mm × 210 mm base films were prepared. One of the base films prepared was set in a rectangular parallelepiped mold of 200 mm × 140 mm × height 15 mm, and the end portion of the base film was fixed with tape. Vacuum forming was performed when the surface temperature of the base film reached a predetermined temperature using a vacuum pressure air forming machine (manufactured by Fuse Vacuum Co., Ltd., NGF type). This was repeated 5 times.

The toughness was evaluated according to the following criteria from the state when the vacuum formed product was peeled off from the mold.

A (good) : No cracks nor tears occurred in the base film 5 times.

B (acceptable) : The base film cracked and torn once in 5 times.

C (defective) : The base film cracked and torn not less than twice in 5 times.

The corners and flat surfaces of the vacuum-formed product that had been in contact with the mold were visually observed and the shapeability was evaluated according to the following criteria.

A (good) : The shaping of the corners and flat surfaces was good in all 5 times.

B (acceptable) : Once in 5 times, the shaping was incomplete, the corners were rounded, or a part of the flat surface was not in close contact with the mold.

C (defective) : The shaping was incomplete, the corners were rounded, or a part of the flat surface was not in close contact with the mold, not less than 2 times in 5 times.

The surface roughness was evaluated according to the following criteria by visually observing the flat surface portion of the vacuum formed product that hadn't been in contact with the mold.

A (good): There was no change in surface shape before and after vacuum forming in all 5 times.

B (acceptable): Once in 5 times, the surface roughness became larger than that before vacuum forming, or defects such as air bubbles occurred.

C (defective): Two or more times in five times, the surface roughness became larger than before vacuum forming, or defects such as air bubbles occurred.

(Surface hardness of decorative film)

Using a table-movable pencil scratch tester (model P) (manufactured by Toyo Seiki Co., Ltd.), the presence or absence of scratches was confirmed while pressing the pencil lead at an angle of 45 degrees and a load of 750 g against the cured film side surface of the decorative film. The hardness of the pencil lead was gradually increased, and the hardness of the lead, which was one step softer than the time when the scar was generated, was defined as the pencil hardness.

(Adhesion of decorative film)

According to JIS-K5600-5-6, the cured film of the decorative film was cross-cut into one hundred 1 $mm^2$ grids using a grid peeling test jig in an environment with a temperature of 23 °C and a relative humidity of 50 %. Adhesive tape No. 252 manufactured by Sekisui Chemical Co., Ltd. was attached onto it and pressed evenly with a spatula. Then, the adhesive tape was peeled off in the 180 degree direction. Adhesion was evaluated according to the following criteria based on the remaining number of the 100 cross-cut grids of the cured films.

|  |  |
|---|---|
| A (good) | : 100 pieces |
| B (acceptable) | : 90-99 pieces |
| C (defective) | : 89 or less |

(Faciality)

The decorative film was visually confirmed from the cured film side and evaluated according to the following criteria.

A (good) : The decorative film had no wrinkles and the cured film had no cracks.

C (defective) : The decorative film had wrinkles or the cured film had cracks.

The following materials were prepared.

Resin [1-1] : weight average molecular weight 70000, ratio of weight average molecular weight to number average molecular weight 1.05, triad syndiotacticity (rr) 75%, glass transition temperature 130 °C, and content of structural unit derived from methyl methacrylate 100% by mass.

Resin [1-2] : weight average molecular weight 101000, ratio of weight average molecular weight to number average molecular weight 1.87, triad syndiotacticity (rr) 52%, glass transition temperature 120 °C, and content of structural unit derived from methyl methacrylate 100% by mass.

Resin [1-3] : a mixture of SMA resin (styrene-maleic anhydride-MMA copolymer, styrene unit / maleic anhydride unit / MMA unit (mass ratio = 56/18/26, weight average molecular weight = 150,000, Glass transition temperature = 138 °C) and the resin [1-2] with a mass ratio of 70:30, and the mixture having glass transition temperature of 132 °C.

Resin [1-4] : A methacrylic resin containing a lactone ring and having a glass transition temperature of 132 °C, obtained in accordance with the method described in Japanese Patent No. 5096707.

Crosslinked rubber particles [RP1-1] : Acrylic three-layer copolymer rubber particles composed of innermost layer (copolymer of methyl methacrylate (MMA) unit / methyl acrylate (MA) unit / allyl methacrylate unit (mass ratio = 9.39 / 0.61 / 0.02)), intermediate layer (copolymer of butyl acrylate unit / styrene unit / allyl methacrylate unit (mass ratio = 41.11 / 8.89 / 2.00)) and outermost layer (copolymer of methyl methacrylate (MMA) unit / methyl acrylate (MA) unit (mass ratio = 37.61 / 2.39)), the particle diameter 0.09 μm.

Crosslinked rubber particles [RP1-2] : Acrylic three-layer copolymer rubber particles composed of innermost layer (copolymer of methyl methacrylate (MMA) unit / methyl acrylate (MA) unit / allyl methacrylate unit (mass ratio = 32.89 / 2.11 / 0.07)), intermediate layer (copolymer of butyl acrylate unit / styrene unit / allyl methacrylate unit which is a crosslinkable monomer (mass ratio = 37.00 / 8.00 / 0.90)) and outermost layer (copolymer of methyl methacrylate (MMA) unit / methyl acrylate (MA) unit (mass ratio = 18.80 / 1.20)), the particle diameter 0.23 μm.

Particles for dispersion [D1] : Copolymer particles of methyl methacrylate (MMA) unit / methyl acrylate unit (mass ratio = 90 / 10, particle diameter 0.11 μm, triad syndiotacticity (rr) 52% , Glass transition temperature 110 °C.

Example 1

A resin composition was obtained by dry-mixing 28.8 parts by mass of crosslinked rubber particles (RP1-1) and 71.2 parts by mass of resin [1-1]. The resin composition was melt-kneaded using a 50 mmφ single-screw extruder (manufactured by Toshiba Machine Co., Ltd-), and the melted resin was extruded from the T-die. The extruded molten resin was pressurized and cooled using a plurality of metal cooling rolls to obtain a base film having a thickness of 500 μm. The evaluation results of the resin composition and the base film are shown in Table 1.

A silicone curable resin composition (SilFORT PHC 587; manufactured by Momentive) was applied to a 300 × 210 mm base film using a bar coater, dried at room temperature for 20 minutes, and then heat-treated at a temperature of 130 °C for 10 minutes to obtain a laminated film (decorative film) composed of a cured film and the base film. The evaluation results of the decorative film are shown in Table 1.

Examples 2 to 7 and Comparative Examples 1 to 7

Resin compositions, base films and a decorative films were obtained in the same manner as that in Example 1 except that the formulations were changed to those shown in Table 1 or 2. The evaluation results are shown in Tables 1 and 2.

As shown in the tables, the base film for a decorative film of the present invention is excellent in surface hardness and weather resistance, excellent in toughness and shapeability during decorative forming, and less surface roughness as compared with the base films shown in the comparative examples. Further, the decorative film of the present invention has higher adhesion, higher surface hardness, and a cured film having no wrinkles or cracks as compared with the decorative films shown in the comparative examples.

[TAB 1]

| | | | TABLE 1 | | | | |
|---|---|---|---|---|---|---|---|
| | Ex. | | | | | | |
| | 1 | 2 | 3 | 4 | 5 | 6 | 7 |
| Resin Composition | | | | | | | |
| (1-1) [mass pts.] | 71.2 | 53.2 | 52.0 | 52.0 | 52.0 | 70.0 | 70.0 |

(continued)

| | Ex. | | | | | | |
|---|---|---|---|---|---|---|---|
| | 1 | 2 | 3 | 4 | 5 | 6 | 7 |
| (1-2) [mass pts.] | | | | | | | |
| [1-3] [mass pts.] | | | | | | | |
| [1-4] [mass pts.] | | | | | | | |
| rr [%] | 75.0 | 75.0 | 68.8 | 68.8 | 68.8 | 71.6 | 72.2 |
| Tg [°c] | 130.0 | 130.0 | 124.6 | 124.6 | 124.6 | 127.1 | 127.5 |
| [D1] [mass pts.] | | | 19.2 | 19.2 | 19.2 | 12.0 | 9.9 |
| [RP1-1] [mass pts.] | 28.8 | 46.8 | 28.8 | 28.8 | 28.8 | 18.0 | |
| (RP1-2) [mass pts.] | | | | | | | 20.1 |
| c [%] | 28.8 | 46.8 | 28.8 | 28.8 | 28.8 | 18.0 | 20.1 |
| rr/c [-] | 2.60 | 1.60 | 2.39 | 2.39 | 2.39 | 3.98 | 3.59 |
| **Base film** | | | | | | | |
| Film forming Temp. [°c] | 154 | 152 | 152 | 167 | 137 | 153 | 153 |
| Surface hardness | H | B | H | H | H | H | H |
| Weather resistance | A | A | A | A | A | A | A |
| Toughness | A | A | A | A | A | B | A |
| Shapeability | A | A | A | A | B | A | A |
| Surface roughness | A | A | A | B | A | A | A |
| **Decorative film** | | | | | | | |
| Curing temp. [°C] | 130 | 130 | 130 | 130 | 130 | 130 | 130 |
| Curing time [min] | 10 | 10 | 10 | 10 | 10 | 10 | 10 |
| Surface hardness | 3H | H | 3H | 3H | 3H | 3H | 3H |
| Adhesion | A | A | A | A | A | A | A |
| Faciality | A | A | A | A | A | A | A |

[TAB 2]

TABLE 2

| | Comp. Ex. | | | | | | |
|---|---|---|---|---|---|---|---|
| | 1 | 2 | 3 | 4 | 5 | 6 | 7 |
| **Resin Composition** | | | | | | | |
| (1-1) [mass pts.] | 30.0 | 82.0 | | | | | |
| (1-2) [mass pts.] | | | 52.0 | 52.0 | 52.0 | | |
| [1-3] [mass pts.] | | | | | | 52.0 | |
| [1-4] [mass pts.] | | | | | | | 52.0 |

(continued)

| | Comp. Ex. | | | | | | |
|---|---|---|---|---|---|---|---|
| | 1 | 2 | 3 | 4 | 5 | 6 | 7 |
| rr [%] | 75.0 | 73.1 | 52.0 | 52.0 | 52.0 | - | - |
| Tg [°C] | 130.0 | 128.4 | 117.3 | 117.3 | 117.3 | 132.0 | 132.0 |
| [D1] [mass pts.] | | 7.2 | 19.2 | 19.2 | 19.2 | 19.2 | 19.2 |
| (RP1-1) [mass pts.] | 70.0 | 10.8 | 28. 8 | 28.8 | 28.8 | 28. 8 | 28.8 |
| (RP1-2) [mass pts.] | | | | | | | |
| c [%] | 70.0 | 10.8 | 28.8 | 28.8 | 28.8 | 28.8 | 28.8 |
| rr/c [-] | 1.07 | 6.77 | 1.81 | 1.81 | 1. 81 | - | - |

| Base film | | | | | | | |
|---|---|---|---|---|---|---|---|
| Film forming Temp. [°C] | 149 | 153 | 142 | 142 | 142 | 150 | 150 |
| Surface hardness | 3B | 2H | F | F | F | F | F |
| Weather resistance | A | A | A | A | A | C | A |
| Toughness | A | C | A | A | A | C | C |
| Shapeability | A | A | A | A | A | A | A |
| Surface roughness | A | A | A | A | A | A | A |

| Decorative film | | | | | | | |
|---|---|---|---|---|---|---|---|
| Curing temp. [°C] | 130 | 130 | 130 | 110 | 110 | 130 | 130 |
| Curing time [min] | 10 | 10 | 10 | 10 | 30 | 10 | 10 |
| Surface hardness | B | 4H | 2H | H | 2H | 3H | 3H |
| Adhesion | A | A | A | C | B | A | A |
| Faciality | C | A | C | A | A | A | A |

EXPLANATION OF SYMBOL

1:    Base film
2:    Functional layer
3:    Decorative layer
4:    Adhesive layer
5:    Base material to be decorated

**Claims**

**1.** A base film for decorative film, the base film comprising a resin composition comprising crosslinked rubber particles and a resin (1), wherein the resin (1) mainly comprises a unit of (meth)acrylic acid ester, has no ring structure in the main chain, has a triad syndiotacticity (rr) of not less than 56% and a glass transition temperature of not less than 122 °C, and the base film satisfies the following formula:

$$1.2 \leq rr/c \leq 5.0$$

wherein rr is a percentage value of the triad syndiotacticity (rr) of the resin (1), and c is a percentage value of the mass ratio of the crosslinked rubber particles to the resin composition.

2. The base film according to claim 1, wherein the amount of the crosslinked rubber particles with respect to the resin composition is 10 % by mass to 50 % by mass.

3. A decorative film comprising the base film according to claim 1.

4. The decorative film according to claim 3, further comprising a functional layer.

5. The decorative film according to any one of claims 3 to 4, further comprising a cohesive layer or an adhesive layer.

6. The decorative film according to any one of claims 3 to 5, further comprising a decorative layer.

7. A decorated shaped product comprising a base material to be decorated and the decorative film according to any one of claims 3 to 6 laminated on the surface of the base material.

8. A method for producing a decorated shaped product, the method comprising subjecting the decorative film according to any one of claims 3 to 6 to a transfer decorative forming or a laminating decorative forming on a base material to be decorated.

9. The method according to claim 8, wherein the transfer decorative forming or the laminating decorative forming is an in-mold decorative molding or an out-mold decorative molding.

[FIG. 1]

[FIG. 2]

<table>
<tr><td colspan="2" align="center">**INTERNATIONAL SEARCH REPORT**</td><td colspan="2">International application No.<br>PCT/JP2019/051617</td></tr>
</table>

**A.  CLASSIFICATION OF SUBJECT MATTER**
B32B 27/20(2006.01)i; B32B 27/30(2006.01)i; C08L 21/00(2006.01)i; C08L 33/04(2006.01)i; C08J 5/18(2006.01)i
FI: B32B27/30 A; C08L33/04; C08L21/00; B32B27/20 Z; C08J5/18 GEY
According to International Patent Classification (IPC) or to both national classification and IPC

**B.  FIELDS SEARCHED**

Minimum documentation searched (classification system followed by classification symbols)
B32B27/20; B32B27/30; C08L21/00; C08L33/04; C08J5/18

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y | WO 2016/002750 A1 (KURARAY CO., LTD.) 07.01.2016<br>(2016-01-07) claims, paragraph [0166], examples | 1-9<br>4-5 |
| Y | JP 2017-205941 A (KURARAY CO., LTD.) 24.11.2017<br>(2017-11-24) claims, paragraph [0138], examples | 4-5 |

☐  Further documents are listed in the continuation of Box C.  ☒  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05 March 2020 (05.03.2020) | Date of mailing of the international search report<br>17 March 2020 (17.03.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

Information on patent family members

International application No.

PCT/JP2019/051617

| Patent Documents referred in the Report | Publication Date | Patent Family | Publication Date |
|---|---|---|---|
| WO 2016/002750 A1 | 07 Jan. 2016 | US 2017/0183428 A1 claims, paragraph [0195], examples | |
| JP 2017-205941 A | 24 Nov. 2017 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016121868 A
- JP H10279766 A
- JP 2009196151 A
- JP 2017101128 A
- JP 2016094534 A
- JP H0725859 A
- JP H11335432 A
- JP H0693060 A
- JP 2004352837 A
- WO 2016140285 A1
- JP 5096707 B